# EUROPEAN PATENT SPECIFICATION

(11) **EP 4 348 192 B1**
(45) Date of publication and mention of the grant of the patent: **28.01.2026**
(21) Application number: 21943588.0
(22) Date of filing: 04.06.2021
(51) Int. Cl.: G01F 23/72, G01F 23/2962

(54) **SENSING ASSEMBLY FOR USE IN PIEZOELECTRIC LIQUID LEVEL SENSOR**
SENSORANORDNUNG ZUR VERWENDUNG IN EINEM PIEZOELEKTRISCHEN FLÜSSIGKEITSSTANDSENSOR
ENSEMBLE DE DÉTECTION POUR UTILISATION DANS UN CAPTEUR PIÉZOÉLECTRIQUE DE NIVEAU DE LIQUIDE

(43) Date of publication of application: 10.04.2024
(73) Proprietor: ABB SCHWEIZ AG, 5400 Baden (CH)
(72) Inventor: WU, Jianjun, Ningbo, Zhejiang 315600 (CN)
(74) Representative: Zimmermann & Partner Patentanwälte mbB
(86) International application number: PCT/CN2021/098432
(87) International publication number: WO 2022/252227

(56) References cited:
- CN-A- 103 076 402
- CN-A- 104 215 300
- CN-A- 108 680 092
- CN-A- 109 270 540
- CN-U- 201 535 664
- CN-U- 201 653 501
- CN-U- 210 051 287
- CN-U- 210 990 005
- CN-Y- 2 490 560
- US-A- 4 733 379
- US-A- 5 412 316
- US-A- 5 680 041
- US-A1- 2016 025 547

## Description

### FIELD

Example embodiments of the present disclosure generally relate to the field of liquid level sensors, and more specifically, to a sensing assembly for use in a piezoelectric liquid level sensor.

### BACKGROUND

An explosive development of modern society has led to a continuing expansion of a demand for petroleum products, which has caused a rapid development of the petrochemical industry. As the transaction amount of crude oil and other chemical products increases continuously, it becomes more and more important to find an accurate, effective and reliable capacity measurement method. In petroleum transactions, the settlement is generally based on the volume or mass of the petroleum products in a tank. In the case of using the volume as a settlement standard, the volume measurement of the petroleum products in the tank has become a focus of the petroleum trade. At present, conventional volume measurement methods generally include an enclosed ruler method, an optical reference line method, a total station method and a capacity comparison method.

The enclosed ruler method is a traditional method of measuring the volume of the tank with a steel tape. By measuring perimeters and thicknesses of different ring plates of an oil tank, corresponding inner diameters can be calculated and the volume of the oil tank can be obtained. The enclosed ruler method has high requirements on the accuracy of the steel tape, the measuring method and experience of an operator. Moreover, the efficiency of the enclosed ruler method is relatively low. The optical reference line method uses an optical instrument to measure a radius difference of the ring plates relative to a reference circle, and then the volume of the tank is obtained. However, the optical reference line method requires high-altitude operations, which is dangerous and labor-intensive. Moreover, the work efficiency of the optical reference line method is also low. The measurement process of the total station method is susceptible to noise interference and is time-consuming. The capacity comparison method replaces the oil with water injected into the tank, and finally obtains the volume of the tank by measuring the volume of the water. The capacity comparison method has a high accuracy, but it takes a long time and consumes a lot of manpower and material resources.

The volume of the oil in the tank is directly related to the height of its liquid level. Thus, the volume of the oil in the tank can be calculated by monitoring the change of the liquid level. Liquid level gauges are commonly used in a liquid level measurement process. Conventional liquid level gauges include contact liquid level gauges such as capacitive, hydrostatic and magnetostrictive liquid level gauges and non-contact liquid level gauges such as laser, ultrasonic and radar liquid level gauges. The magnetostrictive liquid level gauges are widely used in many industries such as oil plants, oil depots, chemical and paper making due to their high accuracy and large measurement range. Taking the actual situation of chemical production into account, sensors in the magnetostrictive liquid level gauges should be able to meet the requirements of high integration level, high sensitivity, strong vibration resistance, and firmness and reliability.

The utility model patent No. CN201020162439.1 describes a magnetostrictive liquid level gauge which uses a piezoelectric sensor as a receiving device for an ultrasonic guided wave propagating along a magnetostrictive wire during the measurement process. The piezoelectric sensor has a high receiving efficiency for the ultrasonic guided wave, but it is also sensitive to a vibration noise during the use of the magnetostrictive liquid level gauge. Even if a band-pass filter unit is used in the magnetostrictive liquid level gauge, it is hard to avoid the vibration noise in the same frequency band as the ultrasonic guided wave. Document US2016025547A1 discloses a sensing assembly for use in a piezoelectric liquid level sensor.

Thus, there is a need for a solution for realizing high-accuracy liquid level measurement under the strong vibration noise.

### SUMMARY

The invention is defined by the subject-matter of independent claim 1. The dependent claims are directed to advantageous embodiments.

In view of the foregoing problems, example embodiments of the present disclosure propose a sensing assembly and a piezoelectric liquid level sensor.

In a first aspect, example embodiments of the present disclosure provide a sensing assembly for use in a piezoelectric liquid level sensor. The sensing assembly comprises: a first piezoelectric sensing module arranged on a magnetostrictive wire and adapted to receive an ultrasonic guided wave signal propagating along the magnetostrictive wire; a second piezoelectric sensing module arranged on the magnetostrictive wire and spaced apart from the first piezoelectric sensing module; and an isolation layer arranged on the magnetostrictive wire between the first piezoelectric sensing module and the second piezoelectric sensing module and adapted to block the ultrasonic guided wave signal from propagating to the second piezoelectric sensing module.

In some embodiments, the isolation layer comprises a material selected from a group consisting of rubber, asphalt, glass, and composite material.

In some embodiments, each of the first and second piezoelectric sensing modules comprises: a matching layer arranged on the magnetostrictive wire and adapted to transmit a mechanical wave vibration; a plurality of piezoelectric ring segments arranged around the matching layer, and forming a first gap and a second gap between the plurality of piezoelectric ring segments; a fastening layer arranged around the plurality of piezoelectric ring segments; a ground electrode extending into the first gap and electrically connected to the corresponding piezoelectric ring segments; and a signal electrode extending into the second gap and electrically connected to the corresponding piezoelectric ring segments.

In some embodiments, the plurality of piezoelectric ring segments comprise: a first half piezoelectric ring having a first polarization direction parallel to the magnetostrictive wire; and a second half piezoelectric ring having a second polarization direction opposite to the first polarization direction, wherein the first gap and the second gap are formed between two ends of the first half piezoelectric ring and two ends of the second half piezoelectric ring.

In some embodiments, each of the first and second half piezoelectric rings occupies an angle in a range of 175° to 180°.

In some embodiments, the thickness of the fastening layer is substantially identical to the thickness of the matching layer in a direction parallel to the magnetostrictive wire.

In some embodiments, the thickness of the plurality of piezoelectric ring segments is smaller than the thickness of the fastening layer and the matching layer in the direction parallel to the magnetostrictive wire.

In some embodiments, the matching layer and the fastening layer are coupled to the isolation layer via adhesives, and each of the plurality of piezoelectric ring segments is spaced apart from the isolation layer.

In some embodiments, the ground electrode of the first piezoelectric sensing module is formed integrally with the ground electrode of the second piezoelectric sensing module.

In some embodiments, the isolation layer is provided with a groove for the ground electrode to pass through.

In some embodiments, each of the plurality of piezoelectric ring segments comprises a material selected from a group consisting of barium titanate, lead zirconate titanate, lead metaniobate or modified lead titanate.

In some embodiments, each of the matching layer and the fastening layer comprises resin or plastic.

In some embodiments, each of the ground electrode and the signal electrode comprises copper.

In some embodiments, the sensing assembly further comprises an outer protection layer enclosing the first piezoelectric sensing module, the second piezoelectric sensing module, and the isolation layer.

In a second aspect, example embodiments of the present disclosure provide a piezoelectric liquid level sensor. The piezoelectric liquid level sensor comprises: a magnetostrictive wire; the sensing assembly according to the first aspect of the present disclosure, the sensing assembly being arranged on the magnetostrictive wire; a probe rod in which the magnetostrictive wire is arranged; and a floating element surrounding the probe rod and being slidable along the probe rod.

According to embodiments of the present disclosure, when the piezoelectric liquid level sensor is used to measure the liquid level of the oil in the tank, the ultrasonic guided wave signal generated on the magnetostrictive wire can propagate to the first piezoelectric sensing module, but would not propagate to the second piezoelectric sensing module due to being blocked by the isolation layer. In the meanwhile, the vibration noise present in the piezoelectric liquid level sensor during the measurement process may be transmitted to both the first piezoelectric sensing module and the second piezoelectric sensing module. Through subtracting signals received by the second piezoelectric sensing module from signals received by the first piezoelectric sensing module, the ultrasonic guided wave signal can be extracted. In this way, the liquid level of the oil in the tank can be calculated precisely under the strong vibration noise.

### DESCRIPTION OF DRAWINGS

Drawings described herein are provided to further explain the present disclosure and constitute a part of the present disclosure. The example embodiments of the disclosure and the explanation thereof are used to explain the present disclosure, rather than to limit the present disclosure improperly.
Fig. 1 illustrates a perspective view of a piezoelectric liquid level sensor in accordance with an embodiment of the present disclosure;
Fig. 2 illustrates a perspective view of a sensing assembly for use in the piezoelectric liquid level sensor in accordance with an embodiment of the present disclosure;
Fig. 3 illustrates a partial schematic view of the sensing assembly as shown in Fig. 2, with an outer protection layer being removed;
Fig. 4 illustrates an explosive view of the sensing assembly as shown in Fig. 2;
Fig. 5 illustrates a schematic arrangement of piezoelectric ring segments in the sensing assembly as shown in Fig. 2;
Fig. 6 is a diagram illustrating signals received by the first piezoelectric sensing module and the second piezoelectric sensing module in the case that a vibration noise is not present in the piezoelectric liquid level sensor;
Fig. 7 is a diagram illustrating a differential signal between the signals received by the first piezoelectric sensing module and the second piezoelectric sensing module in the case that the vibration noise is not present in the piezoelectric liquid level sensor;
Fig. 8 is a diagram illustrating the signals received by the first piezoelectric sensing module and the second piezoelectric sensing module in the case that the vibration noise is present in the piezoelectric liquid level sensor; and
Fig. 9 is a diagram illustrating the differential signal between the signals received by the first piezoelectric sensing module and the second piezoelectric sensing module in the case that the vibration noise is present in the piezoelectric liquid level sensor.
Throughout the drawings, the same or similar reference symbols are used to indicate the same or similar elements.

### DETAILED DESCRIPTION OF EMBODIMENTS

Principles of the present disclosure will now be described with reference to several example embodiments shown in the drawings.

The term "comprises" or "includes" and its variants are to be read as open terms that mean "includes, but is not limited to." The term "or" is to be read as "and/or" unless the context clearly indicates otherwise. The term "based on" is to be read as "based at least in part on." The term "being operable to" is to mean a function, an action, a motion or a state can be achieved by an operation induced by a user or an external mechanism. The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be included below. A definition of a term is consistent throughout the description unless the context clearly indicates otherwise.

According to embodiments of the present disclosure, in order to reduce the influence of the vibration noise on the measurement accuracy of the magnetostrictive piezoelectric liquid level sensor, two piezoelectric sensing modules are provided in the piezoelectric liquid level sensor and an isolation layer is arranged between the two piezoelectric sensing modules. The above idea may be implemented in various manners, as will be described in detail in the following paragraphs.

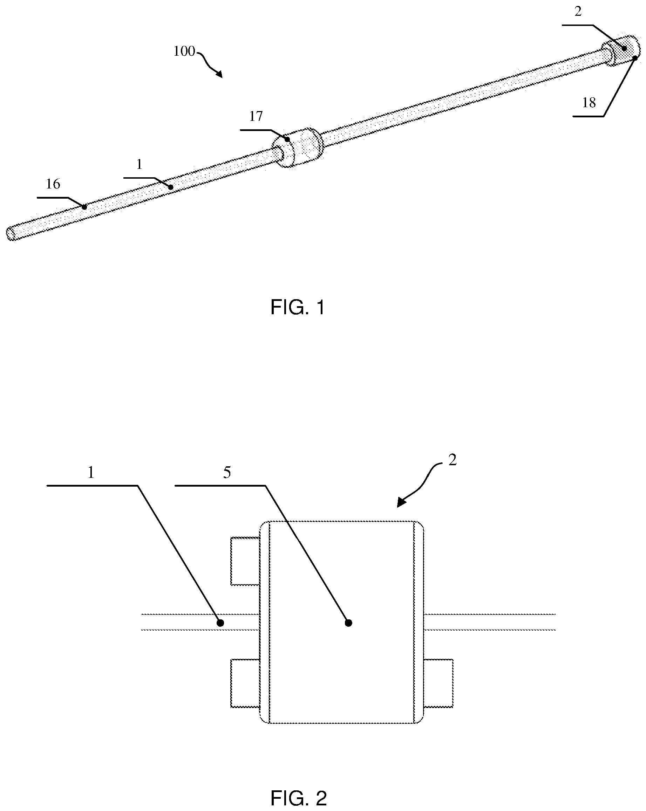

Hereinafter, the principles of the present disclosure will be described in detail with reference to Figs. 1-9. Referring to Fig. 1 first, Fig. 1 illustrates a perspective view of a piezoelectric liquid level sensor 100 in accordance with an embodiment of the present disclosure. As shown, the piezoelectric liquid level sensor 100 generally includes a magnetostrictive wire 1, a sensing assembly 2, a probe rod 16, and a floating element 17. The magnetostrictive wire 1 is arranged in the probe rod 16. The sensing assembly 2 is arranged near an end of the magnetostrictive wire 1 and is received in a housing 18. Example constructions of the sensing assembly 2 will be described in detail with reference to Figs. 2-5 hereinafter. The floating element 17 surrounds the probe rod 16 and is slidable with respect to the probe rod 16. A permanent magnet (not shown) is installed inside the floating element 17 so as to create a first static magnetic field around the magnetostrictive wire 1.

In some embodiments, the magnetostrictive wire 1 includes iron-cobalt-nickel alloy. In other embodiments, the magnetostrictive wire 1 may be made of other materials.

When the piezoelectric liquid level sensor 100 is used to measure the liquid level of the oil in the tank, the piezoelectric liquid level sensor 100 may be fixed on the tank such that the probe rod 16 is inserted into the oil. Since the floating element 17 is subjected to buoyancy in the oil, the floating element 17 will float on the surface of the oil. At this point, if a current pulse signal is applied to the magnetostrictive wire 1, a second dynamic magnetic field will be created around the magnetostrictive wire 1. The second dynamic magnetic field may interact with the first static magnetic field generated by the permanent magnet in the floating element 17. Such an interaction will result in a deformation of the magnetostrictive wire 1 at a position corresponding to the floating element 17. Due to the deformation of the magnetostrictive wire 1, an ultrasonic guided wave signal may be generated and propagate along the magnetostrictive wire 1. The ultrasonic guided wave signal may be received by the sensing assembly 2. By calculating a time difference between the current pulse signal being applied and the ultrasonic guided wave signal being received and taking a known sound speed of the ultrasonic guided wave signal into account, a distance between the floating element 17 and the sensing assembly 2 can be calculated, thereby obtaining information about the liquid level.

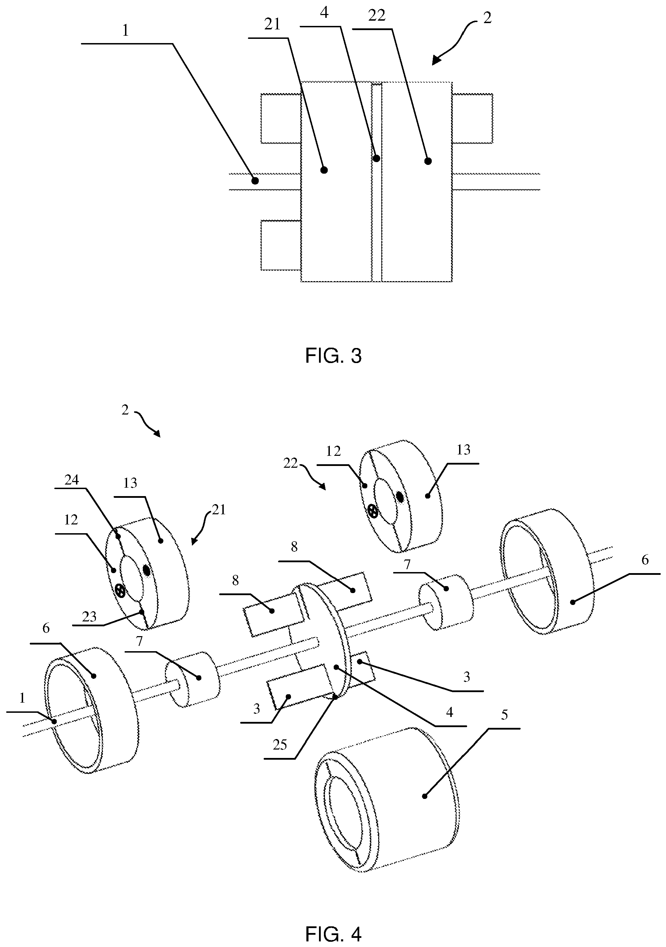

Fig. 2 illustrates a perspective view of the sensing assembly 2 in accordance with an embodiment of the present disclosure. As shown in Fig. 2, the sensing assembly 2 is arranged on the magnetostrictive wire 1. The sensing assembly 2 includes an outer protection layer 5 and other elements (not shown) enclosed by the outer protection layer 5. Fig. 3 illustrates a partial schematic view of the sensing assembly 2 as shown in Fig. 2, with the outer protection layer 5 being removed. As shown in Fig. 3, the sensing assembly 2 includes a first piezoelectric sensing module 21, a second piezoelectric sensing module 22, and an isolation layer 4. The first piezoelectric sensing module 21 and the second piezoelectric sensing module 22 are arranged on the magnetostrictive wire 1 and spaced apart from each other. The isolation layer 4 is arranged on the magnetostrictive wire 1 between the first piezoelectric sensing module 21 and the second piezoelectric sensing module 22. For example, the isolation layer 4 may be provided with a circular hole through which the magnetostrictive wire 1 extends. The first piezoelectric sensing module 21 is closer to the floating element 17 than the second piezoelectric sensing module 22. The first piezoelectric sensing module 21 is adapted to receive the ultrasonic guided wave signal propagating along the magnetostrictive wire 1. The isolation layer 4 is adapted to block the ultrasonic guided wave signal from propagating to the second piezoelectric sensing module 22.

With the above arrangement, the ultrasonic guided wave signal generated on the magnetostrictive wire 1 can propagate to the first piezoelectric sensing module 21, but would not propagate to the second piezoelectric sensing module 22 due to being blocked by the isolation layer 4. Meanwhile, the vibration noise present in the piezoelectric liquid level sensor 100 during the measurement process may be transmitted to both the first piezoelectric sensing module 21 and the second piezoelectric sensing module 22. Through subtracting the signals received by the second piezoelectric sensing module 22 from the signals received by the first piezoelectric sensing module 21, the ultrasonic guided wave signal can be obtained. Based on the ultrasonic guided wave signal, the liquid level of the oil in the tank can be calculated precisely under the strong vibration noise.

In some embodiments, the isolation layer 4 includes a material selected from a group consisting of rubber, asphalt, glass, and composite material. These materials may block the ultrasonic guided wave signal from propagating to the second piezoelectric sensing module 22 reliably. In other embodiments, the isolation layer 4 may include other materials which can block the propagation of the ultrasonic guided wave signal.

In some embodiments, the isolation layer 4 may be a compact layer. In other embodiments, the isolation layer 4 may be a porous layer. The scope of the present disclosure is not limited to specific forms of the isolation layer 4, as long as the isolation layer 4 may block the propagation of the ultrasonic guided wave signal.

Fig. 4 illustrates an explosive view of the sensing assembly 2 as shown in Fig. 2. As shown in Fig. 4, the first piezoelectric sensing module 21 includes a matching layer 7, two piezoelectric ring segments, a fastening layer 6, a ground electrode 3, and a signal electrode 8.

The matching layer 7 is arranged on the magnetostrictive wire 1 and adapted to transmit a mechanical wave vibration. In some embodiments, the matching layer 7 is provided with an inner hole through which the magnetostrictive wire 1 extends. The diameter of the inner hole may be substantially identical to that of the circular hole on the isolation layer 4. The magnetostrictive wire 1 may be coupled to the inner hole of the matching layer 7 through glues, such as epoxy glues. In other embodiments, the matching layer 7 may be coupled to the magnetostrictive wire 1 in other manners.

The two piezoelectric ring segments, i.e., a first half piezoelectric ring 12 and a second half piezoelectric ring 13, are arranged around the matching layer 7. The first half piezoelectric ring 12 and the second half piezoelectric ring 13 may be coupled to the matching layer 7 through glues, such as epoxy glues, or in other manners. A first gap 23 and a second gap 24 are formed between two ends of the first half piezoelectric ring 12 and two ends of the second half piezoelectric ring 13. The first half piezoelectric ring 12 has a first polarization direction parallel to the magnetostrictive wire 1. The second half piezoelectric ring 13 has a second polarization direction opposite to the first polarization direction.

The fastening layer 6 is arranged around the first half piezoelectric ring 12 and the second half piezoelectric ring 13. The fastening layer 6 may be coupled to the first half piezoelectric ring 12 and the second half piezoelectric ring 13 through glues, such as epoxy glues, or in other manners. The fastening layer 6 may play a role in fixing and protecting the first half piezoelectric ring 12 and the second half piezoelectric ring 13.

The ground electrode 3 extends into the first gap 23 and is electrically connected to the first half piezoelectric ring 12 and the second half piezoelectric ring 13 through conductive glues. The signal electrode 8 extends into the second gap 24 and is electrically connected to the first half piezoelectric ring 12 and the second half piezoelectric ring 13 through conductive glues.

In some embodiments, as shown in Fig. 4, the ground electrode 3 and the signal electrode 8 are formed as a sheet shape. In other embodiments, the ground electrode 3 and the signal electrode 8 may be formed as other shapes, such as a strip shape.

As shown in Fig. 4, the second piezoelectric sensing module 22 has a similar structure as the first piezoelectric sensing module 21. Specifically, the second piezoelectric sensing module 22 also includes the matching layer 7, the first half piezoelectric ring 12, the second half piezoelectric ring 13, the fastening layer 6, the ground electrode 3, and the signal electrode 8. The arrangement of the matching layer 7, the first half piezoelectric ring 12, the second half piezoelectric ring 13, the fastening layer 6, the ground electrode 3, and the signal electrode 8 of the second piezoelectric sensing module 22 is substantially the same as the first piezoelectric sensing module 21, which will not be described in detail herein. The signal electrode 8 of the first piezoelectric sensing module 21 is electrically isolated from the signal electrode 8 of the second piezoelectric sensing module 22, so as to provide different signals. The first half piezoelectric ring 12 of the second piezoelectric sensing module 22 has the same polarization direction as the first half piezoelectric ring 12 of the first piezoelectric sensing module 21. The second half piezoelectric ring 13 of the second piezoelectric sensing module 22 has the same polarization direction as the second half piezoelectric ring 13 of the first piezoelectric sensing module 21.

In some embodiments, as shown in Fig. 4, the ground electrode 3 of the first piezoelectric sensing module 21 is formed integrally with the ground electrode 3 of the second piezoelectric sensing module 22. In this case, the isolation layer 4 may be provided with a groove 25 for the ground electrode 3 to pass through. In other embodiments, the ground electrode 3 of the first piezoelectric sensing module 21 may be separate from the ground electrode 3 of the second piezoelectric sensing module 22.

According to embodiments of the present disclosure, when the piezoelectric liquid level sensor 100 is used to measure the liquid level of the oil in the tank, the ultrasonic guided wave signal generated on the magnetostrictive wire 1 may be transmitted to the first piezoelectric sensing module 21 via the matching layer 7, thereby applying a pressure on the first piezoelectric sensing module 21. Moreover, the vibration noise will apply another pressure on the first piezoelectric sensing module 21. Then, electrical signals may be generated on the signal electrode 8 of the first piezoelectric sensing module 21 so as to indicate the signals received by first piezoelectric sensing module 21. Meanwhile, the ultrasonic guided wave signal is blocked by the isolation layer 4 and would not be transmitted to the second piezoelectric sensing module 22. Thus, only the vibration noise will apply a pressure on the second piezoelectric sensing module 22, and corresponding electrical signals may be generated on the signal electrode 8 of the second piezoelectric sensing module 22 so as to indicate the signals received by the second piezoelectric sensing module 22. Through subtracting the electrical signals generated on the signal electrode 8 of the second piezoelectric sensing module 22 from the electrical signals generated on the signal electrode 8 of the first piezoelectric sensing module 21, the ultrasonic guided wave signal can be extracted. Based on the ultrasonic guided wave signal, the liquid level of the oil in the tank can be calculated precisely under the strong vibration noise.

It is to be understood that, in addition to measuring the liquid level of the oil in the tank, the piezoelectric liquid level sensor 100 may be used to measure the liquid level of various liquids in various containers, such as other chemical products.

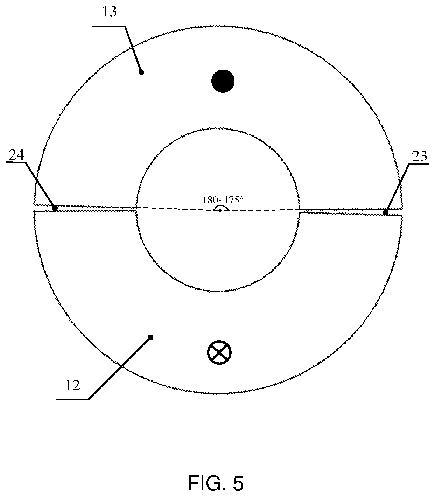

Fig. 5 illustrates a schematic arrangement of the first piezoelectric sensing module 21 and the second piezoelectric sensing module 22. As shown in Fig. 5, each of the first and second half piezoelectric rings 12, 13 occupies an angle in a range of 175° to 180°, such as 178°. With such an arrangement, the first gap 23 and the second gap 24 are formed between the first half piezoelectric ring 12 and the second half piezoelectric ring 13. Each of the first gap 23 and the second gap 24 may occupy an angle in a range of 0° to 5°, such as 2°. It is to be understood that the range of the angle occupied by the first piezoelectric sensing module 21 and the second piezoelectric sensing module 22 is only an example implementation.

As shown in Fig. 5, the first polarization direction of the first half piezoelectric ring 12 is represented by a cross sign which indicates that the first polarization direction is perpendicular to the paper and inwards. The second polarization direction of the second half piezoelectric ring 13 is represented by a black solid circle which indicates that the second polarization direction is perpendicular to the paper and outwards.

In some embodiments, as shown in Fig. 4, the thickness of the fastening layer 6 is substantially identical to the thickness of the matching layer 7 in a direction parallel to the magnetostrictive wire 1. In some embodiments, the fastening layer 6 may be aligned with the matching layer 7 in the direction parallel to the magnetostrictive wire 1. In other embodiments, the thickness of the fastening layer 6 may be different from the thickness of the matching layer 7.

In some embodiments, the thickness of the first piezoelectric sensing module 21 and the second piezoelectric sensing module 22 is smaller than the thickness of the fastening layer 6 and the matching layer 7 in the direction parallel to the magnetostrictive wire 1. With such an arrangement, on one hand, the ultrasonic guided wave signal generated on the magnetostrictive wire 1 may be transmitted to the first piezoelectric sensing module 21 via the matching layer 7 reliably, and on the other hand, the first piezoelectric sensing module 21 and the second piezoelectric sensing module 22 may be fixed and protected by the fastening layer 6.

In some embodiments, the matching layer 7 and the fastening layer 6 are coupled to the isolation layer 4 via adhesives, and each of the first piezoelectric sensing module 21 and the second piezoelectric sensing module 22 is spaced apart from the isolation layer 4. With such an arrangement, the stability of the first piezoelectric sensing module 21 and the second piezoelectric sensing module 22 may be improved.

In some embodiments, each of the first piezoelectric sensing module 21 and the second piezoelectric sensing module 22 includes a material selected from a group consisting of barium titanate, lead zirconate titanate, lead metaniobate or modified lead titanate. In other embodiments, the first piezoelectric sensing module 21 and the second piezoelectric sensing module 22 may be made of other piezoelectric materials.

In some embodiments, each of the matching layer 7 and the fastening layer 6 includes resin or plastic. In other embodiments, each of the matching layer 7 and the fastening layer 6 may be made of other materials.

In some embodiments, each of the ground electrode 3 and the signal electrode 8 comprises copper. In other embodiments, each of the ground electrode 3 and the signal electrode 8 may be made of other conductive materials.

Although each of the first piezoelectric sensing module 21 and the second piezoelectric sensing module 22 as described above only includes two piezoelectric ring segments, it is to be understood that in other embodiments, each of the first piezoelectric sensing module 21 and the second piezoelectric sensing module 22 may include more than two piezoelectric ring segments. In each of the first piezoelectric sensing module 21 and the second piezoelectric sensing module 22, the piezoelectric ring segments are arranged around the matching layer 7, and form the first gap 23 and the second gap 24 between the piezoelectric ring segments.

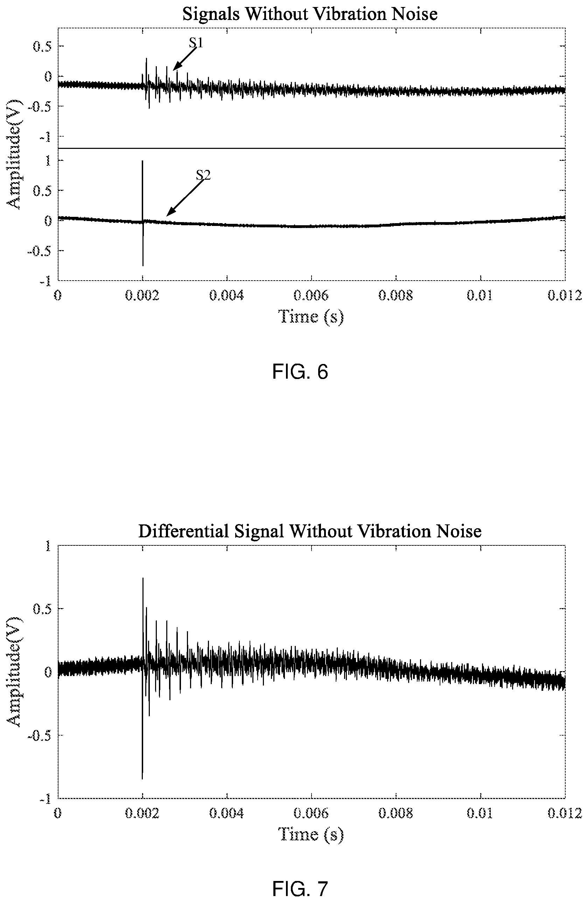

Fig. 6 is a diagram illustrating signals received by the first piezoelectric sensing module 21 and the second piezoelectric sensing module 22 in the case that a vibration noise is not present in the piezoelectric liquid level sensor 100. In Fig. 6, S1 represents the signals received by the first piezoelectric sensing module 21, and S2 indicates the signals received by the second piezoelectric sensing module 22, in the case that the vibration noise is not present in the piezoelectric liquid level sensor 100. In this case, the amplitude of S1 is substantially equal to that of the ultrasonic guided wave signal generated on the magnetostrictive wire 1, and the amplitude of S2 is substantially equal to zero.

Fig. 7 is a diagram illustrating a differential signal between the signals received by the first piezoelectric sensing module 21 and the second piezoelectric sensing module 22 in the case that the vibration noise is not present in the piezoelectric liquid level sensor 100. As shown in Fig. 7, through subtracting S2 from S1, the differential signal is obtained and corresponds to the ultrasonic guided wave signal. Based on the amplitude of the differential signal, the piezoelectric liquid level sensor 100 may determine the liquid level of the oil in the tank.

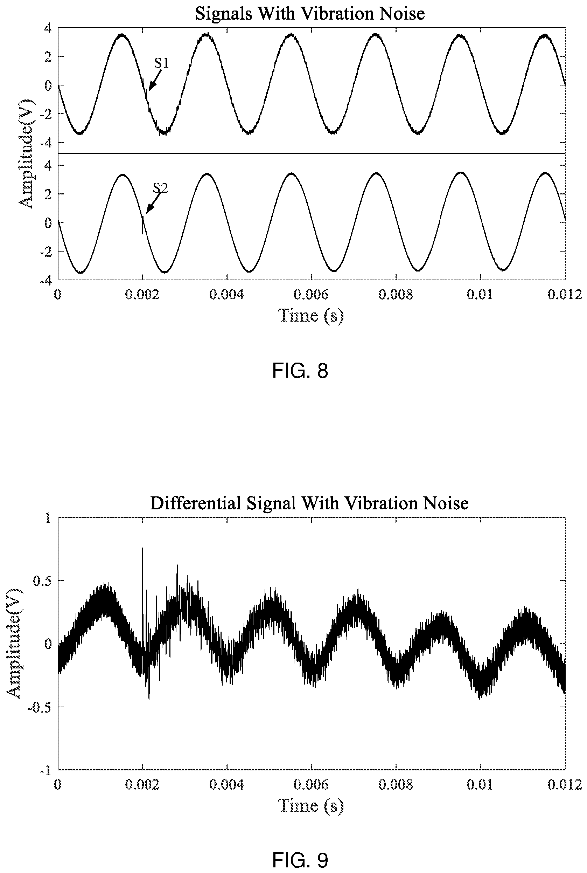

Fig. 8 is a diagram illustrating signals received by the first piezoelectric sensing module 21 and the second piezoelectric sensing module 22 in the case that a vibration noise is present in the piezoelectric liquid level sensor 100. As shown in Fig. 8, S1 indicates that the ultrasonic guided wave signal generated on the magnetostrictive wire 1 is already submerged in the vibration noise, and S2 indicates that the amplitude of the vibration noise is relatively high.

Fig. 9 is a diagram illustrating a differential signal between the signals received by the first piezoelectric sensing module 21 and the second piezoelectric sensing module 22 in the case that the vibration noise is present in the piezoelectric liquid level sensor 100. As shown in Fig. 9, through subtracting S2 from S1, the differential signal is obtained and generally corresponds to the ultrasonic guided wave signal. Based on the amplitude of the differential signal, the piezoelectric liquid level sensor 100 may determine the liquid level of the oil in the tank.

Although the invention has been described above with reference to one or more preferred embodiments, it will be appreciated that various changes or modifications may be made without departing from the scope of the invention as defined in the appended claims.

## Claims

1. A sensing assembly (2) for use in a piezoelectric liquid level sensor (100), comprising:
a first piezoelectric sensing module (21) arranged on a magnetostrictive wire (1) and adapted to receive an ultrasonic guided wave signal propagating along the magnetostrictive wire (1);
**characterized by**
a second piezoelectric sensing module (22) arranged on the magnetostrictive wire (1) and spaced apart from the first piezoelectric sensing module (21); and
an isolation layer (4) arranged on the magnetostrictive wire (1) between the first piezoelectric sensing module (21) and the second piezoelectric sensing module (22) and adapted to block the ultrasonic guided wave signal from propagating to the second piezoelectric sensing module (22).

2. The sensing assembly (2) according to claim 1, wherein the isolation layer (4) comprises a material selected from a group consisting of rubber, asphalt, glass, and composite material.

3. The sensing assembly (2) according to claim 1, wherein each of the first and second piezoelectric sensing modules (21, 22) comprises:
a matching layer (7) arranged on the magnetostrictive wire (1) and adapted to transmit a mechanical wave vibration;
a plurality of piezoelectric ring segments arranged around the matching layer (7), and forming a first gap (23) and a second gap (24) between the plurality of piezoelectric ring segments;
a fastening layer (6) arranged around the plurality of piezoelectric ring segments;
a ground electrode (3) extending into the first gap (23) and electrically connected to the corresponding piezoelectric ring segments; and
a signal electrode (8) extending into the second gap (24) and electrically connected to the corresponding piezoelectric ring segments.

4. The sensing assembly (2) according to claim 3, wherein the plurality of piezoelectric ring segments comprise:
a first half piezoelectric ring (12) having a first polarization direction parallel to the magnetostrictive wire (1); and
a second half piezoelectric ring (13) having a second polarization direction opposite to the first polarization direction,
wherein the first gap (23) and the second gap (24) are formed between two ends of the first half piezoelectric ring (12) and two ends of the second half piezoelectric ring (13).

5. The sensing assembly (2) according to claim 4, wherein each of the first and second half piezoelectric rings (12, 13) occupies an angle in a range of 175° to 180°.

6. The sensing assembly (2) according to claim 3, wherein the thickness of the fastening layer (6) is substantially identical to the thickness of the matching layer (7) in a direction parallel to the magnetostrictive wire (1).

7. The sensing assembly (2) according to claim 6, wherein the thickness of the plurality of piezoelectric ring segments is smaller than the thickness of the fastening layer (6) and the matching layer (7) in the direction parallel to the magnetostrictive wire (1).

8. The sensing assembly (2) according to claim 3, wherein the matching layer (7) and the fastening layer (6) are coupled to the isolation layer (4) via adhesives, and each of the plurality of piezoelectric ring segments is spaced apart from the isolation layer (4).

9. The sensing assembly (2) according to claim 3, wherein the ground electrode (3) of the first piezoelectric sensing module (21) is formed integrally with the ground electrode (3) of the second piezoelectric sensing module (22).

10. The sensing assembly (2) according to claim 9, wherein the isolation layer (4) is provided with a groove (25) for the ground electrode (3) to pass through.

11. The sensing assembly (2) according to claim 3, wherein each of the plurality of piezoelectric ring segments comprises a material selected from a group consisting of barium titanate, lead zirconate titanate, lead metaniobate or modified lead titanate.

12. The sensing assembly (2) according to claim 3, wherein each of the matching layer (7) and the fastening layer (6) comprises resin or plastic.

13. The sensing assembly (2) according to claim 3, wherein each of the ground electrode (3) and the signal electrode (8) comprises copper.

14. The sensing assembly (2) according to claim 1, further comprising an outer protection layer (5) enclosing the first piezoelectric sensing module (21), the second piezoelectric sensing module (22), and the isolation layer (4).

15. A piezoelectric liquid level sensor (100) comprising:
a magnetostrictive wire (1);
the sensing assembly (2) according to any of claims 1-14, the sensing assembly (2) being arranged on the magnetostrictive wire (1);
a probe rod (16) in which the magnetostrictive wire (1) is arranged; and
a floating element (17) surrounding the probe rod (16) and being slidable along the probe rod (16).

## Patentansprüche

1. Sensoranordnung (2) zur Verwendung in einem piezoelektrischen Flüssigkeitsstandsensor (100), Folgendes umfassend:
ein erstes piezoelektrisches Sensormodul (21), das auf einem magnetostriktiven Draht (1) angeordnet ist und
eingerichtet ist, um ein ultraschallgeführtes Wellensignal zu empfangen, das sich entlang des magnetostriktiven Drahts (1) fortpflanzt;
**gekennzeichnet durch**
ein zweites piezoelektrisches Sensormodul (22), das auf dem magnetostriktiven Draht (1) angeordnet ist und von dem ersten piezoelektrischen Sensormodul (21) beabstandet ist; und
eine Isolationsschicht (4), die auf dem magnetostriktiven Draht (1) zwischen dem ersten piezoelektrischen Sensormodul (21) und dem zweiten piezoelektrischen Sensormodul (22) angeordnet ist und eingerichtet ist, um ein Fortpflanzen des ultraschallgeführten Wellensignals zu dem zweiten piezoelektrischen Sensormodul (22) zu blockieren.

2. Sensoranordnung (2) nach Anspruch 1, wobei die Isolationsschicht (4) ein Material umfasst, das aus einer Gruppe ausgewählt ist, bestehend aus Gummi, Asphalt, Glas und Verbundmaterial.

3. Sensoranordnung (2) nach Anspruch 1, wobei sowohl das erste als auch das zweite piezoelektrische Sensormodul (21, 22) Folgendes umfassen:
eine Abgleichschicht (7), die auf dem magnetostriktiven Draht (1) angeordnet ist und eingerichtet ist, um eine mechanische Wellenschwingung zu übertragen;
mehrere piezoelektrische Ringsegmente, die um die Abgleichschicht (7) herum angeordnet sind und eine erste Lücke (23) und eine zweite Lücke (24) zwischen den mehreren piezoelektrischen Ringsegmenten ausbilden;
eine Befestigungsschicht (6), die um die mehreren piezoelektrischen Ringsegmente herum angeordnet ist;
eine Masseelektrode (3), die sich in die erste Lücke (23) erstreckt und mit den entsprechenden piezoelektrischen Ringsegmenten elektrisch verbunden ist; und
eine Signalelektrode (8), die sich in die zweite Lücke (24) erstreckt und mit den entsprechenden piezoelektrischen Ringsegmenten elektrisch verbunden ist.

4. Sensoranordnung (2) nach Anspruch 3, wobei die mehreren piezoelektrischen Ringsegmente Folgendes umfassen:
einen ersten piezoelektrischen Halbring (12) mit einer ersten Polarisationsrichtung parallel zu dem magnetostriktiven Draht (1); und
einen zweiten piezoelektrischen Halbring (13) mit einer zweiten Polarisationsrichtung, die der ersten Polarisationsrichtung entgegengesetzt ist,
wobei die erste Lücke (23) und die zweite Lücke (24) zwischen zwei Enden des ersten piezoelektrischen Halbringes (12) und zwei Enden des zweiten piezoelektrischen Halbringes (13) ausgebildet sind.

5. Sensoranordnung (2) nach Anspruch 4, wobei sowohl der erste als auch der zweite piezoelektrische Halbring (12, 13) einen Winkel in einem Bereich von 175° bis 180° einnehmen.

6. Sensoranordnung (2) nach Anspruch 3, wobei die Dicke der Befestigungsschicht (6) im Wesentlichen identisch ist mit der Dicke der Abgleichschicht (7) in einer Richtung parallel zu dem magnetostriktiven Draht (1).

7. Sensoranordnung (2) nach Anspruch 6, wobei die Dicke der mehreren piezoelektrischen Ringsegmente kleiner ist als die Dicke der Befestigungsschicht (6) und der Abgleichschicht (7) in der Richtung parallel zu dem magnetostriktiven Draht (1).

8. Sensoranordnung (2) nach Anspruch 3, wobei die Abgleichschicht (7) und die Befestigungsschicht (6) über Klebstoffe mit der Isolationsschicht (4) verbunden sind und jedes der mehreren piezoelektrischen Ringsegmente von der Isolationsschicht (4) beabstandet ist.

9. Sensoranordnung (2) nach Anspruch 3, wobei die Masseelektrode (3) des ersten piezoelektrischen Sensormoduls (21) integral mit der Masseelektrode (3) des zweiten piezoelektrischen Sensormoduls (22) ausgebildet ist.

10. Sensoranordnung (2) nach Anspruch 9, wobei die Isolationsschicht (4) mit einer Nut (25) versehen ist, um die Masseelektrode (3) hindurchzuführen.

11. Sensoranordnung (2) nach Anspruch 3, wobei jedes der mehreren piezoelektrischen Ringsegmente ein Material umfasst, das aus einer Gruppe ausgewählt ist, bestehend aus Bariumtitanat, Bleizirkonattitanat, Bleimetaniobat oder modifiziertem Bleititanat.

12. Sensoranordnung (2) nach Anspruch 3, wobei sowohl die Abgleichschicht (7) als auch die Befestigungsschicht (6) Harz oder Kunststoff umfassen.

13. Sensoranordnung (2) nach Anspruch 3, wobei sowohl die Masseelektrode (3) als auch die Signalelektrode (8) Kupfer umfassen.

14. Sensoranordnung (2) nach Anspruch 1, weiterhin umfassend eine äußere Schutzschicht (5), die das erste piezoelektrische Sensormodul (21), das zweite piezoelektrische Sensormodul (22) und die Isolationsschicht (4) umschließt.

15. Piezoelektrischer Flüssigkeitsstandsensor (100), Folgendes umfassend:
einen magnetostriktiven Draht (1);
die Sensoranordnung (2) nach einem der Ansprüche 1 bis 14, wobei die Sensoranordnung (2) auf dem magnetostriktiven Draht (1) angeordnet ist;
einen Sondenstab (16), in dem der magnetostriktive Draht (1) angeordnet ist; und
ein Schwimmelement (17), das den Sondenstab (16) umgibt und entlang des Sondenstabs (16) verschiebbar ist.

## Revendications

1. Ensemble de détection (2) à utiliser dans un capteur de niveau de liquide piézoélectrique (100), comprenant :
un premier module de détection piézoélectrique (21) disposé sur un fil magnétostrictif (1) et conçu pour recevoir un signal à ondes ultrasonores guidées se propageant le long du fil magnétostrictif (1) ;
**caractérisé par**
un deuxième module de détection piézoélectrique (22) disposé sur le fil magnétostrictif (1) et espacé du premier module de détection piézoélectrique (21) ; et
une couche d'isolation (4) disposée sur le fil magnétostrictif (1) entre le premier module de détection piézoélectrique (21) et le deuxième module de détection piézoélectrique (22) et conçue pour empêcher le signal à ondes ultrasonores guidées de se propager jusqu'au deuxième module de détection piézoélectrique (22).

2. Ensemble de détection (2) selon la revendication 1, dans lequel la couche d'isolation (4) comprend un matériau choisi dans un groupe constitué par le caoutchouc, l'asphalte, le verre et un matériau composite.

3. Ensemble de détection (2) selon la revendication 1, dans lequel chacun des premier et deuxième modules de détection piézoélectriques (21, 22) comprend :
une couche d'adaptation (7) disposée sur le fil magnétostrictif (1) et conçue pour transmettre une vibration à ondes mécaniques ;
une pluralité de segments d'anneau piézoélectrique disposés autour de la couche d'adaptation (7), et formant un premier espace (23) et un deuxième espace (24) entre la pluralité de segments d'anneau piézoélectrique ;
une couche de fixation (6) disposée autour de la pluralité de segments d'anneau piézoélectrique ;
une électrode de masse (3) s'étendant à l'intérieur du premier espace (23) et reliée électriquement aux segments d'anneau piézoélectrique correspondants ; et
une électrode de signal (8) s'étendant à l'intérieur du deuxième espace (24) et reliée électriquement aux segments d'anneau piézoélectrique correspondants.

4. Ensemble de détection (2) selon la revendication 3, dans lequel la pluralité de segments d'anneau piézoélectrique comprend :
un premier demi-anneau piézoélectrique (12) ayant une première direction de polarisation parallèle au fil magnétostrictif (1) ; et
un deuxième demi-anneau piézoélectrique (13) ayant une deuxième direction de polarisation opposée à la première direction de polarisation,
dans lequel le premier espace (23) et le deuxième espace (24) sont formés entre deux extrémités du premier demi-anneau piézoélectrique (12) et deux extrémités du deuxième demi-anneau piézoélectrique (13).

5. Ensemble de détection (2) selon la revendication 4, dans lequel chacun des premier et deuxième demi-anneaux piézoélectriques (12, 13) occupe un angle compris entre 175° et 180°.

6. Ensemble de détection (2) selon la revendication 3, dans lequel l'épaisseur de la couche de fixation (6) est sensiblement égale à l'épaisseur de la couche d'adaptation (7) dans une direction parallèle au fil magnétostrictif (1).

7. Ensemble de détection (2) selon la revendication 6, dans lequel l'épaisseur de la pluralité de segments d'anneau piézoélectrique est inférieure à l'épaisseur de la couche de fixation (6) et de la couche d'adaptation (7) dans la direction parallèle au fil magnétostrictif (1).

8. Ensemble de détection (2) selon la revendication 3, dans lequel la couche d'adaptation (7) et la couche de fixation (6) sont couplées à la couche d'isolation (4) par le biais d'adhésifs, et chaque segment de la pluralité de segments d'anneau piézoélectrique est espacé de la couche d'isolation (4).

9. Ensemble de détection (2) selon la revendication 3, dans lequel l'électrode de masse (3) du premier module de détection piézoélectrique (21) est formée d'un seul tenant avec l'électrode de masse (3) du deuxième module de détection piézoélectrique (22).

10. Ensemble de détection (2) selon la revendication 9, dans lequel la couche d'isolation (4) est pourvue d'une rainure (25) pour le passage de l'électrode de masse (3).

11. Ensemble de détection (2) selon la revendication 3, dans lequel chaque segment de la pluralité de segments d'anneau piézoélectrique comprend un matériau choisi dans un groupe constitué par le titanate de baryum, le zirconotitanate de plomb, le métaniobate de plomb et le titanate de plomb modifié.

12. Ensemble de détection (2) selon la revendication 3, dans lequel la couche d'adaptation (7) et la couche de fixation (6) comprennent chacune de la résine ou du plastique.

13. Ensemble de détection (2) selon la revendication 3, dans lequel l'électrode de masse (3) et l'électrode de signal (8) comprennent chacune du cuivre.

14. Ensemble de détection (2) selon la revendication 1, comprenant en outre une couche de protection externe (5) entourant le premier module de détection piézoélectrique (21), le deuxième module de détection piézoélectrique (22) et la couche d'isolation (4).

15. Capteur de niveau de liquide piézoélectrique (100) comprenant :
un fil magnétostrictif (1) ;
l'ensemble de détection (2) selon l'une quelconque des revendications 1 à 14, l'ensemble de détection (2) étant disposé sur le fil magnétostrictif (1) ;
une tige-sonde (16) dans laquelle est disposé le fil magnétostrictif (1) ; et
un élément flottant (17) entourant la tige-sonde (16) et pouvant glisser le long de la tige-sonde (16).
